# EUROPEAN PATENT APPLICATION

(11) **EP 4 685 007 A1**
(43) Date of publication of application: **28.01.2026**
(21) Application number: 24190373.1
(22) Date of filing: 23.07.2024
(51) Int. Cl.: B60L 53/16, B60L 53/18, B60L 53/30, B60L 53/31

(54) **CHARGER SYSTEM AND METHOD OF ASSEMBLING A CHARGER SYSTEM**

(71) Applicant: ABB E-mobility B.V., 2629 JG Delft (NL)
(72) Inventor: BECH, Lars, 3119 JA Schiedam (NL); RAAIJMAKERS, Stefan, 2613 WN Delft (NL); KOBIERSKI, Marianne, 3195VM Pernis (NL); VISSER, Matthijs, 3131ET Zuid-Holland (NL); ESCUDE, Miguel Rodriguez, 3111 PB Zuid Holland (NL)
(74) Representative: Zimmermann & Partner Patentanwälte mbB

(57) **Abstract**

A charger system (1, 2, 3, 4) and a corresponding assembling method are provided. The charger system (1, 2, 3, 4) includes a stationary base (20) including a base connector (30, 130, 131, 132) electrically connectible to an electrical supply line (22) and a base guide (21), and the charger system (1, 2, 3, 4) further includes a detachable charger top (50) including a charger device (80), a top connector (60, 160, 161, 162) electrically connected to the charger device (80), and a top guide (51). When the charger top (50) is mounted to the base (20), the top guide (51) is configured to mate with the base guide (21) such as to bring the top connector (60, 161, 162, 163) and the base connector (30, 130, 131, 132) into a predetermined positional relation to each other.

## Description

### TECHNICAL FIELD

Embodiments of the present disclosure generally relate to a charger system and a corresponding assembling method, particularly to EVSE (Electric Vehicle Supply Equipment) type chargers.

### BACKGROUND

Charger systems, for example used to charge electrical vehicles (EV), are becoming more and more widespread. For example, an EVSE converts grid electricity into a format that an EV can use to charge. Conventional charger systems are embodied in a way that a connection thereof to an electrical supply line, such as a customer premises wiring to an electrical grid, is established by fastening a part of the EVSE, such as a main switch of the EVSE, to the electrical supply line via a nut and bolt connection.

In particular with the rise of high power charging, the electrical supply line and/or the cables connecting the EVSEs to the grid are becoming larger (e.g., thicker), and more or larger equipment is built into the EVSE. A common desire is to keep the overall dimension of the EVSE small. In this case, due to the larger (thicker) cables, the space inside the EVSE for establishing the connection becomes more and more limited.

There is a desire to facilitate the electrical connection of the charger to the grid while limiting the overall dimensions of the charger.

### SUMMARY

According to an aspect of the present disclosure, a charger system as set out in claim 1 is provided. According to another aspect of the present disclosure, a method of assembling a charger system as set out in claim 11 is provided.

In embodiments, a charger system comprises a stationary base and a detachable charger top. The base includes a base connector, and a base guide. The base connector of the base is electrically connectible or electrically connected to an electrical supply line, such as a grid line. The charger top includes a charger device, a top connector, and a top guide. The top connector is electrically connected to the charger device. The top guide is configured such that, when the charger top is mounted to the base, e.g. moved into a mounting position with respect to the base and/or lowered onto the base, to mate with the base guide such that the top connector and the base connector are brought into a predetermined positional relation to each other, e.g. a predetermined relative position with respect to one another.

The predetermined positional relation typically includes that the top connector and the base connector are aligned. Aligning, as used herein, may include contacting each other via corresponding contact surfaces; i.e. reducing a space between the contact surfaces to zero or virtually zero. Aligning, as used herein, may include a linear alignment, such as a vertical alignment with respect to a mounting foundation, of the top connector and the base connector, while securing a predetermined space between the top connector and the base connector.

Mating of the guides, as used herein, may include a mechanical guiding operation. For example, the base guide and the top guide are configured as mechanical counterparts. As an example, the base guide may be a protrusion, and the top guide may be a corresponding recess. As a further example, the base guide may be a recess, and the top guide may be corresponding protrusion. There is no limitation as to the number of base and top guides, and two or more top guides may be provided to mate with a corresponding number of base guides, each of the counterparts exemplarily configured as a pair of protrusion and recess.

An electrical supply line, as used herein, includes e.g. a phase line, a neutral line, and/or a protective earth (PE) line.

In embodiments, a method of assembling a charger system, as described herein, comprises providing the stationary base, establishing an electrical connection between the base connector and the electrical supply line, and mounting the charger top onto the stationary base.

With the techniques described herein, beneficially, an installation process of a charger system may be facilitated and may become more reliable. For example, by first installing the connector onto the cable before lowering the charger top, e.g. including a main part of an EVSE, onto the base. The cable may be routed through the base and connected to the base connector that serves as a first half of a connection means. As the charger top is lowered, with the help of the guides, the top connector is brought into the predetermined positional relation with respect to the base connector. The top connector serves as a second half of the connection means. Then, a reliable connection between the first and second half of the connection means may be established. In this way, the installation of the cables at the base is not obstructed by the further parts, e.g. main parts, of the EVSE contained in the charger top, such as the charger device.

Further embodiments are described in the dependent claims.

For example, in embodiments, when the predetermined positional relation is taken, or established, in the mounting process, the top connector electrically contacts the base connector. For example, the top connector and the base connector are configured as mechanically corresponding mating parts made of or including an electroconductive material, and are configure to mate to establish the electrical connection, or electrical contact, therebetween. Mating of the top connector and the base connector, as used herein, may include a mechanical guiding operation. For example, the base connector and the top connector are configured as mechanical counterparts. As an example, the base connector may be a protrusion (e.g., a pin), and the top connector may be a corresponding recess (e.g., a slot). As a further example, the base connector may be a recess (e.g., a slot), and the top connector may be corresponding protrusion (e.g., a pin). As yet a further example, the both the base connector and the top connector may be a protrusion providing a respective top or base contact surface, wherein the corresponding opposing contact surfaces touch each other (i.e., contact each other) when in the predetermined positional relation. Any pin-type contact may be spring-loaded. There is no limitation as to the number of base and top connectors, and two or more top connectors may be provided to mate with a corresponding number of base connectors, each of the counterparts exemplarily configured as a pair of protrusion and recess. When multiple base and top connectors are provided, they may or may not correspond to different electrical phases.

As a further example, in embodiments, the charger system - in particular either the base or the charger top - further comprises a moveable contactor. The moveable contactor may, in particular, be a pivotable contactor, such as a hinged contactor. In this exemplary configuration, when the top connector and the base connector are in the predetermined positional relation, they are spaced apart from one another. When in the predetermined positional relation, the moveable contactor may be moved, e.g. manually or automatically moved, to establish the electrical connection between the top connector and the base connector. Herein, such a movement of the moveable contactor is referred to as a connection movement.

In further embodiments pertaining to this example, the moveable contactor may include a bridging device holder. The bridging device holder is configured to hold a bridging device. For example, a bridging device has a first contactable end and a second contactable end. The bridging device may be embodied as a fuse having a rated current, and upon occurrence of an overcurrent that exceeds the rated current, the fuse may interrupt an electrical continuity between the first contactable end and the second contactable end. The bridging device holder may be configured such that, upon the connection movement, the first contactable end establishes an electrical contact with the top connector, e.g. via a mechanical engagement such as a snap into place, and the second contactable end establishes an electrical contact with the base connector, e.g. via a mechanical engagement such as a snap into place. That is, the electrical connection between the top connector and the base connector is established via the bridging device, such as a fuse. In further embodiments, instead of a fuse, the bridging device may be embodied as e.g. a jumper, a jumper wire, or a busbar.

In embodiments, the charger system includes multiple base connectors and multiple top connectors each corresponding to a respective base connector (i.e., connector pairs). Some base connectors or each base connector may be connected to a different electrical phase of an electrical grid. For example, in a three-phase grid, the charger system may include three connector pairs.

In embodiments, the base is stationarily mountable or stationarily mounted to a foundation, such as a foundation on the floor of a building.

In embodiments, the charger device of the charger system includes an electrical converter, such as a power converter, and in particular an EVSE type converter. For example, the power converter has a rated power of more than 5 kW, optionally more than 10 kW and preferably more than 100 kW. Exemplary rated power levels include 150 kW, 400 kW, 600 kW, 800 kW, 1.2 MW, 3 MW. Typically, the grid phases have a phase voltage (phase vs. neutral) of less than 1 kV. A wire gauge, or conductor cross-sectional area, of the electrical supply line is chosen such as to safely handle a power in the range of the rated power of the power converter at these voltages. For example, the conductor cross section is 100 mm² or more, such as 185 mm² or more, or 240 mm² or more. Note that multiple conductors for the same phase, neutral, or protective earth (PE), in the electrical power supply line may be provided in parallel, and/or that multiple electrical supply lines may be provided in parallel.

In embodiments, in the method described herein, the establishing of the electrical connection between the top connector and the base connector includes mating the base connector with the base connector. Mating of the top connector and the base connector, as used herein, may include a mechanical guiding operation. For example, the base connector and the top connector are configured as mechanical counterparts. As an example, the base connector may be a protrusion (e.g., a pin), and the top connector may be a corresponding recess (e.g., a slot). As a further example, the base connector may be a recess (e.g., a slot), and the top connector may be corresponding protrusion (e.g., a pin). As yet a further example, the both the base connector and the top connector may be a protrusion providing a respective top or base contact surface, wherein the corresponding opposing contact surfaces touch each other (i.e., contact each other) when in the predetermined positional relation. Any pin-type contact may be spring-loaded. There is no limitation as to the number of base and top connectors, and two or more top connectors may be provided to mate with a corresponding number of base connectors, each of the counterparts exemplarily configured as a pair of protrusion and recess. When multiple base and top connectors are provided, they may or may not correspond to different electrical phases.

In embodiments, in the method described herein, the establishing of the electrical connection between the top connector and the base connector includes moving the moveable contactor towards the base connector and/or the top connector; in particular, when a bridging device is held by a bridging device holder of the moveable contactor, the establishing of the electrical connection between the top connector and the base connector includes moving the moveable contactor such that the bridging device mates with the top connector and the base connector. Typically, one end of the bridging device mates with the top connector, and the other end of the bridging device mates with the base connector.

### BRIEF DESCRIPTION OF THE DRAWINGS

Fig. 1 is a schematic front view of a charger device according to an embodiment;
Fig. 2 is a schematic front view of a charger device according to another embodiment;
Fig. 3 is a schematic front view of a charger device according to yet another embodiment;
Fig. 4 is a schematic front view of a charger device according to yet another embodiment before assembly;
Fig. 5 is a schematic front view of the charger device of Fig. 4 after assembly and with an established electrical connection between a top connector and a base connector;
Fig. 6 is a schematic sectional side view of the charger device of Fig. 4 before assembly;
Fig. 7 is a schematic sectional side view of the charger device of Fig. 4 after assembly and before establishment of an electrical connection between the top connector and the base connector; and
Fig. 8 is a schematic sectional side view of the charger device of Fig. 4 after assembly and after establishment of an electrical connection between the top connector and the base connector.

### DETAILED DESCRIPTION

Technology is described hereinafter with reference to the figures, in which aspects exemplary embodiments are shown. The claimed invention may, however, be embodied in different forms and should not be construed as being limited to the embodiments set forth herein. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment aspect is not necessarily limited to that embodiment aspect and can be practiced in any other embodiments aspects even if not so illustrated, or if not so explicitly described. The features, functions, and advantages may be achieved independently in various embodiments manners or may be combined in yet other embodiments.

Before describing exemplary embodiments aspects illustratively depicted in the several figures, a general introduction is provided to further understanding. Electrical Vehicle Supply Equipment (EVSE) is known as a technology used to convert grid electricity into a format that electric vehicles (EVs) can use to charge. Grid connection cables are typically fastened to the EVSEs via a nut and bolt connection. As high powers are demanded, the grid connection cables become larger (e.g. in cross section) though the space remains limited. Challenges typically occurring upon connecting these grid connection cables via nut and bolt connections include large cable bend radii, limited space for placing and holding the nut and bolt in position, and limited space for tooling to secure the nut and the bolt. That is, the nut-and-bolt approach is increasingly difficult to execute due to space constraints for incoming cables, around the connection point, and for tooling used during the installation. If the connection is not securely fastened, for example if the lugs do not mate flush, i.e. are not properly aligned, this may result in a poor connection which, in turn, may lead to arcing, fire, and equipment damage.

With the above general understanding borne in mind, embodiments for charging systems and corresponding assembling methods thereof are described below.

The present disclosure generally describes a technology in which a secure connection between a grid cable and a charging device, such as an EVSE, is provided by considering this connection interface as part of the overall charging system, instead of as an isolated nut-and-bolt connection. This is done by first installing, at a base, a connector onto the cable(s) before lowering a part including the charging device (EVSE) onto the base. The cable(s) is/are connected to a first half of a connector. As the part including the charging device is lowered onto the base, with the help of guide means or alignment means, a second part of the connector, which is present at the part that includes the charging device, automatically aligns and ensures a proper (safe, secure, reliable) connection.

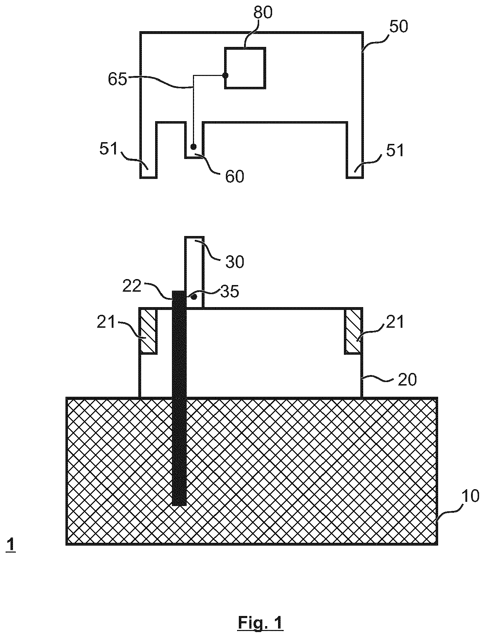

Fig. 1 shows a schematic front view of a charger system 1 according to an embodiment. The charger system 1 includes a stationary base 20 and a detachable charger top 50. The base 20 is, without limitation, mounted on a foundation 10, such as a building wall. An electrical supply line 22 is routed through the foundation 10 and the base 20. The base includes a base connector 30. The base connector 30 is located at a predetermined position on the base 20. The base connector 30, when installing the base 20 on the foundation 10, is electrically connected to the electrical supply line 22 via a line connection 35. Note that for the sake of better visibility, the line connection 35 is shown as a thin line, which is not intended to reflect the actual cross-section thereof. The line connection 35 does not need to be a distinct part, but may e.g. be established via crimping. The same applies to any of the further connections shown herein.

The base 20 further includes a pair of base guides 21. In the example of Fig. 1, each base guide 21 is a recess. It is noted, however, that this is not limiting, and one or more of the base guides 21 may be configured differently, for example as a protrusion. In addition, the number of base guides 21 is not particularly limited.

The charger top 50 houses a charger device 80. The charger device 80 is, for example but without limitation, a charger device 80 used in charging of electric vehicles, such as an EVSE. That is, the charger device 80 may be further connectible or connected to an electric vehicle for charging/discharging. The charger top 50 includes a top connector 60. The top connector 60 is electrically connected to the charger device 80 via a charger connection 65. The top connector 60 is located at a predetermined position of the charger top 50.

The charger top 50 further includes a pair of top guides 51. In the example of Fig. 1, each top guide 51 is a protrusion. It is noted, however, that this is not limiting, and one or more of the top guides 51 may be configured differently, for example as a recess. In addition, the number of top guides 51 is not particularly limited, but preferably corresponds to the number of base guides 21.

When the charger top 50 is mounted to the base 20 (in the example shown in Fig. 1, lowered onto the base), each top guide 51 mates with the corresponding (i.e., counterpart) base guide 21. Since the base connector 30 and the top connector 60 are each located at their respective predetermined positions, when the top guide(s) 51 mate(s) with the base guide(s) 21, the base connector 30 and the top connector 60 come into a predetermined positional relation to each other. In other words: They are aligned relative to each other. In the example of Fig. 1, the base connector 30 and the top connector 60 also mate with each other when the predetermined positional relation is reached, thereby establishing an electrical connection therebetween. As a result, a current may flow through the supply line 22, the line connection 35, the base connector 30, the top connector 60, and the charger connection 65 to the charger 80, or vice-versa.

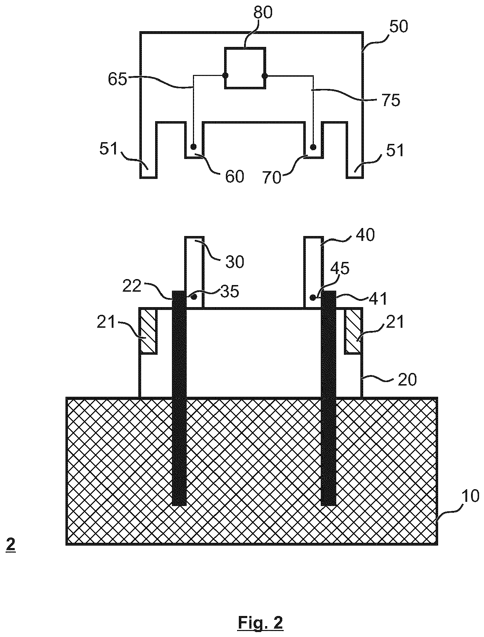

Fig. 2 shows another embodiment of a charger system 2 which is similar to the charger system 1 of Fig. 1. Unless otherwise specified, the description made in connection with the embodiment shown in Fig. 1 also applies to the embodiment shown in Fig. 2. The charger system 2 is further configured to establish an auxiliary connection, such as one or more of a data connection, an auxiliary power connection, a signaling connection, a measurement connection, etc., between the base 20 and the charger top 50. An auxiliary line 41 is connected, via an auxiliary line connection 45, to a base auxiliary connector 40. A counterpart top auxiliary connector 70 at the charger top 50 mates with the base auxiliary connector 40 when the charger top 50 is mounted, or installed, on the base 20. A top auxiliary line 75 is connected between the top auxiliary connector 70 and the charging device 80.

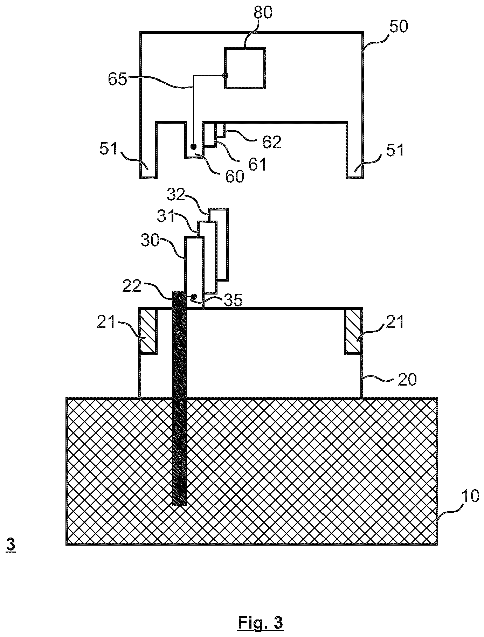

Fig. 3 shows another embodiment of a charger system 3 which is similar to the charger system 1 of Fig. 1. Unless otherwise specified, the description made in connection with the embodiment shown in Fig. 1 also applies to the embodiment shown in Fig. 3. The charger system 3 is configured to establish a three-phase power connection between the base 20 and the charger top 50. In addition to the base connector 30 (in this embodiment, referred to as a first base connector 30), a second base connector 31 and a third base connector 32 are provided at the base 20. Each of the first, second, and third base connectors 30, 31, 32 is connected to different electrical supply lines whereof for the sake of better overview, only electrical supply line 22 is shown. Each of the different electrical supply lines provide a different phase (for example, a U-phase, a V-phase, and a W-phase) of a three-phase electrical grid. Respective counterpart top connectors (in this connection, a first top connector 60, a second top connector 61, and a third top connector 62) are provided at the charger top 50, and each of these is connected to the charger device 80. In this way, for example, the charger device 80 may have a higher rated power as compared to the single-phase configuration of Fig. 1. Note that the connectors are not limited to a specific number (such as three), and may be an arbitrary number. Also, the electrical supply lines are not limited to the phases, but may include a neutral (N) and/or protective earth (PE) line. For example, in addition to the first, second, and third top connectors 60, 61, 62, a fourth and a firth top connector (not shown) may be provided; respective counterparts, i.e. a fourth and a fifth base connector (not shown) may be provided; and the fourth base connector may be connected to a neutral (N) line, and the fifth base connector may be connected to a protective earth (PE) line.

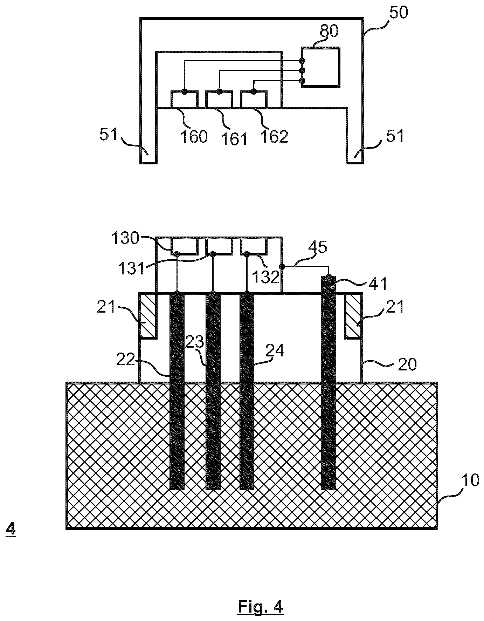

Fig. 4 shows yet another embodiment of a charger system 4. The charger system 1 includes a stationary base 20 and a detachable charger top 50. The base 20 is, without limitation, mounted on a foundation 10, such as a building wall. Electrical supply lines 22, 23, 24, are each routed through the foundation 10 and the base 20. The base includes a first base connector 130, a second base connector 131, and a third base connector 132. The first, second and third base connectors 30, 31, 32 are each located at predetermined positions on the base 20. The first base connector 130, when installing the base 20 on the foundation 10, is electrically connected to the electrical supply line 22 via a line connection. The second base connector 131, when installing the base 20 on the foundation 10, is electrically connected to the electrical supply line 23 via a line connection. The third base connector 132, when installing the base 20 on the foundation 10, is electrically connected to the electrical supply line 24 via a line connection. For example, the electrical supply line 22 corresponds to a U-phase of the grid, the electrical supply line 23 corresponds to a V-phase of the grid, and the electrical supply line 24 corresponds to a W-phase of the grid.

The base 20 further includes a pair of base guides 21. In the example of Fig. 4, each base guide 21 is a recess. It is noted, however, that this is not limiting, and one or more of the base guides 21 may be configured differently, for example as a protrusion. In addition, the number of base guides 21 is not particularly limited.

The charger top 50 houses a charger device 80. The charger device 80 is, for example but without limitation, a charger device 80 used in charging of electric vehicles, such as an EVSE.

That is, the charger device 80 may be further connectible or connected to an electric vehicle for charging/discharging. The charger top 50 includes a first top connector 160, a second top connector 161, and a third top connector 162. Each of the top connectors 160, 161, 162 is electrically connected to the charger device 80 via a respective charger connection. The first, second and third top connectors 160, 161, 162 are each located at predetermined positions of the charger top 50.

The charger top 50 further includes a pair of top guides 51. In the example of Fig. 4, each top guide 51 is a protrusion. It is noted, however, that this is not limiting, and one or more of the top guides 51 may be configured differently, for example as a recess. In addition, the number of top guides 51 is not particularly limited, but preferably corresponds to the number of base guides 21.

When the charger top 50 is mounted to the base 20 (in the example shown in Fig. 4, lowered onto the base), each top guide 51 mates with the corresponding (i.e., counterpart) base guide 21. Since the base connectors 130, 131, 132 and the top connectors 160, 161, 162 are each located at their respective predetermined positions, when the top guide(s) 51 mate(s) with the base guide(s) 21, the base connectors 130, 131, 132 and the top connectors 160, 161, 162 come into a predetermined positional relation to each other. In other words: They are aligned relative to each other, in corresponding pairs. In the example of Fig. 4, and contrary to the example of Fig. 1, the base connectors 130, 131, 132 and the top connectors 160, 161, 162 do not mate with each other when the predetermined positional relation is reached.

The charger system 4 is further configured to establish an auxiliary connection, such as one or more of a data connection, an auxiliary power connection, a signaling connection, a measurement connection, etc., between the base 20 and the charger top 50. An auxiliary line 41 is connected, via an auxiliary line connection 45, to a base auxiliary connector 40. A counterpart top auxiliary connector (not shown) at the charger top 50 mates with the base auxiliary connector 40 when the charger top 50 is mounted, or installed, on the base 20. A top auxiliary line (not shown) is connected between the top auxiliary connector and the charging device 80. Note that any such data connection is optional and not mandatory.

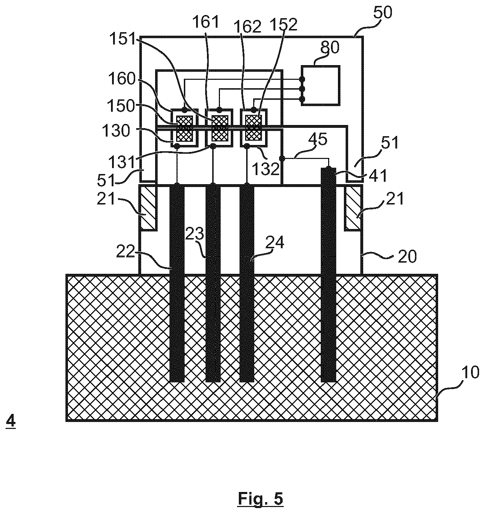

Fig. 5 shows the charger device 4 when the predetermined positional relation is reached. In order to establish the connection between the first base connector 130 and the first top connector 160 (first connector pair), between the second base connector 131 and the second top connector 161 (second connector pair), and between the third base connector 132 and the third top connector 162 (third connector pair), a first bridging device (e.g., a fuse 150) is inserted in the first connector pair, a second bridging device (e.g., a fuse 151) is inserted in the second connector pair, and a third bridging device (e.g., a fuse 153) is inserted in the third connector pair. Insertion of the bridging devices is discussed below. It is noted that the bridging devices may be embodied as fuses, as exemplified, but may also be embodied e.g. as jumpers, jumper wires, or busbars.

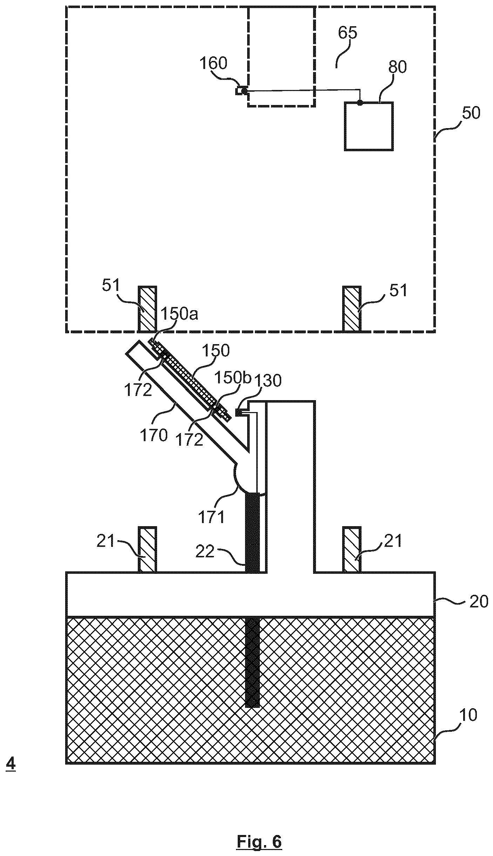

Fig. 6 shows a sectional side view of the charger device 4 analogously to Fig. 4. The charger top 50 has not yet been mounted (e.g., lowered) onto the base 20. A moveable contactor 170 is pivotally attached to the base 20. The moveable contactor 170 may be pivoted, via a hinge 171, to perform a connection movement, or connection establishing movement. The moveable contactor 170 includes a fuse holder 172 (in Fig. 6: a pair of fuse holders 172). A fuse 150, as a bridging device, is inserted into the fuse holder 172. The fuse 150 has a first end 150a and a second end 150b. The first end 150a is to get into electrical contact with the top connector 60. The second end 150b is to come into electrical contact with the base connector 30.

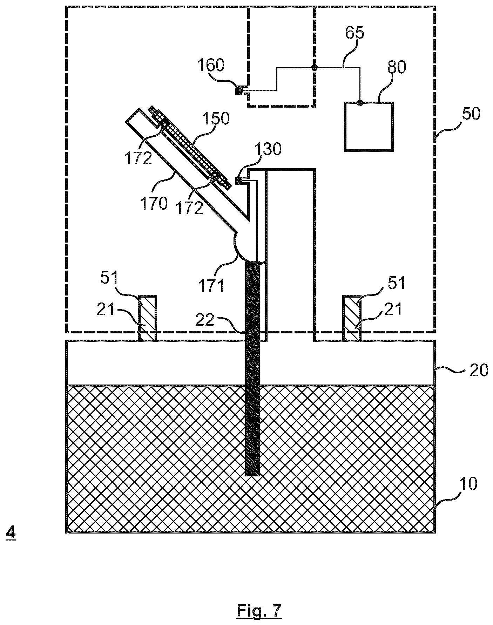

Fig. 7 shows the charger device 4 of Fig. 6 when the charger top 50 has been mounted on the base 20 (here: lowered onto the base 20) but before the connection operation (here: moving the moveable contactor 170) is performed.

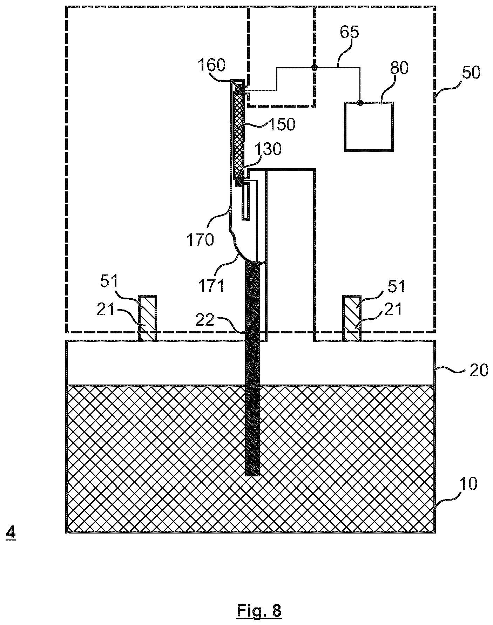

Fig. 8 shows the charger device 4 of Fig. 7 after the connection operation has been performed. The moveable contactor 170, serving as a handle, has been pivoted, via the hinge 171, into the closed position. The first end 150a of the fuse 150 mates with the top connector 160. The second end 150b of the fuse 150 mates with the base connector 130. Thereby, an electrical connection is established between the top connector 160 and the base connector 130 via the fuse 150. As a result, a current may flow through the supply line 22, the line connection, the base connector 130, the fuse 150, the top connector 160, and the charger connection to the charger 80, or vice-versa. Note that the same applies to the other phases (supply lines 23, 24 and their respective base connectors 131, 132, top connectors 161, 162, and fuses 151, 152).

That is, the charger device 4 implements the concept of the technology described herein by using fuses to connect the aligned power pins to the charger device 80 (e.g., EVSE). The electrical supply lines 22, 23, 24 are connected to the respective base connectors 130, 131, 132 of the base 20. One or multiple supply lines may be connected to one fuse. When the charger top 50 is lowered onto the base 20, the connection can be made, for example, by inserting the fuses 150, 151, 152 into their respective holders 172, and then rotating the moveable contactor(s) 170 into position. For example, there is only one moveable contactor 170 for all the fuses (e.g., three fuses in a three-phase configuration). In an example, the movable contactor 170 may include a fuse box. For example, the movable contactor 170 may essentially be the fuse box. In other words: In an exemplary configuration, the fuses are located in a fuse holder, the fuse holder being the movable contactor 170, which is then moved or inserted (e.g., pivoted) to create the connection.

Note that the concept of the charger device 4 is not limited to a three-phase configuration, as shown, but may also be employed in a configuration with a different number of phases, such as a one-phase configuration, or other numbers of phases. In addition, note that additional pairs of top connectors and base connectors may be provided, for example for establishing a neutral (N) connection. The N connection as well may also be equipped with a moveable fuse, as with the phase lines.

With the technology described herein, beneficially, a simplified and reliable grid connection system for charger devices, such as EVSEs, is obtained. The system provides a mechanism for connecting a grid cable, or electrical supply line, inside a charger system in a way that provides a secure attachment despite any space constraints.

Although particular embodiments have been shown and described, it will be understood that it is not intended to limit the claimed inventions to the preferred embodiments, and it will be obvious to those skilled in the art that various changes and modifications may be made without department from the spirit and scope of the claimed inventions. The specification and drawings are, accordingly, to be regarded in an illustrative rather than restrictive sense. The claimed inventions are intended to cover alternatives, modifications, and equivalents.

## Claims

1. A charger system (1, 2, 3, 4), comprising:
a stationary base (20) including:
a base connector (30, 130, 131, 132) electrically connectible to an electrical supply line (22, 23, 24); and
a base guide (21), and
a detachable charger top (50) including:
a charger device (80);
a top connector (60, 160,161, 162) electrically connected to the charger device (80); and
a top guide (51),
wherein, when the charger top (50) is mounted to the base (20), the top guide (51) is configured to mate with the base guide (21) such as to bring the top connector (60, 161, 162, 163) and the base connector (30, 130, 131, 132) into a predetermined positional relation to each other.

2. The charger system (1, 2, 3) according to claim 1, wherein, in the predetermined positional relation, the top connector (60) electrically contacts the base connector (30).

3. The charger system (1, 2, 3) according to claim 2, wherein the base connector (30) and the top connector (60) are each of a mating type compatible to one another.

4. The charger system (4) according to claim 1, further comprising a moveable contactor (170) configured - when the top connector (160, 161, 162) and the base connector (130, 131, 132) are in the predetermined positional relation - to establish an electrical connection between the top connector (160, 161, 162) and the base connector (130, 131, 132) upon a connection movement of the moveable contactor (170).

5. The charger system (4) according to claim 4, wherein the moveable contactor (170) includes a bridging device holder (172) configured for holding a bridging device (150, 151, 152), wherein optionally the bridging device includes any of a jumper, a jumper wire, a busbar, or a fuse.

6. The charger system (4) according to claim 5, wherein the moveable contactor (170) is configured to establish the electrical connection between the top connector (160, 161, 162) and the base connector (130, 131, 132) via the bridging device (150, 151, 152).

7. The charger system (1, 2, 3, 4) according to any one of the preceding claims, wherein the electrical supply line (22, 23, 24) is connected to an electrical supply line such as a premises wiring.

8. The charger system (1, 2, 3, 4) according to any one of the preceding claims, including multiple base connectors (30, 130, 131, 132) and multiple corresponding top connectors (60, 161, 162, 163), in particular three base connectors (30, 130, 131, 132) and three corresponding top connectors (60, 160, 161, 162), the base connectors to be connected to different phases of an electrical grid.

9. The charger system (1, 2, 3, 4) according to any one of the preceding claims, wherein the base (20) is stationarily mountable or mounted to a foundation (10) such as a wall of a building.

10. The charger system (1, 2, 3, 4) according to any one of the preceding claims, wherein the charger device (80) includes an electrical converter, in particular an Electric Vehicle Supply Equipment, EVSE, converter.

11. A method of assembling a charger system, comprising:
providing a stationary base (20) including a base connector (30, 130, 131, 132) and a base guide (21);
establishing an electrical connection between the base connector (30, 130, 131, 132) and an electrical supply line (22, 23, 24);
mounting a charger top (50) onto the stationary base (20), the charger top (50) including a charger device (80), a top connector (60, 161, 162, 163) electrically connected to the charger device (80), and a top guide (51), wherein the top guide (51) mates with the base guide (21) such that it brings the top connector (60, 160, 161, 162) and the base connector (30, 130, 131, 132) into a predetermined positional relation to each other.

12. The method of claim 11, further comprising establishing an electrical connection between the top connector (60, 161, 162, 163) and the base connector (30, 130, 131, 132).

13. The method of claim 12, wherein establishing the electrical connection between the top connector (60, 160, 161, 162) and the base connector (30, 130, 131, 132) includes mating the base connector (30, 130, 131, 132) with the top connector (60, 160, 161, 162), in particular automatically mating the base connector (30, 130, 131, 132) with the top connector (60, 160, 161, 162) via the mounting of the charger top (50) onto the stationary base (20).

14. The method of claim 12, wherein either one of the stationary base (20) and the charger top (50) further includes a moveable contactor (170), and wherein the establishing of the electrical connection between the top connector (60, 161, 162, 263) and the base connector (30, 130, 131, 132) includes moving the moveable contactor (170) towards the base connector (30, 130, 131, 132) and/or the top connector (60, 160, 161, 162).

15. The method of claim 14, wherein the moveable contactor (170) further includes a bridging device holder (172), and wherein, when a bridging device (150) is held by the bridging device holder (172), the establishing of the electrical connection between the top connector (60, 160, 161, 162) and the base connector (30, 130, 131, 132) includes moving the moveable contactor (170) such that the bridging device (150) mates with the top connector (60, 160, 161, 162) and the base connector (30, 130, 131, 132).
